# EUROPÄISCHE PATENTSCHRIFT

(11) **EP 1 912 844 B1**
(45) Veröffentlichungstag und Bekanntmachung des Hinweises auf die Patenterteilung: **13.11.2013**
(21) Anmeldenummer: 06777434.9
(22) Anmeldetag: 23.06.2006
(51) Int. Cl.: B60W 40/00, B60K 31/00, B60T 7/22, B60R 21/013, B60W 30/16

(54) **VERFAHREN ZUM ERZEUGEN VON UMWELTHYPOTHESEN FÜR FAHRERASSISTENZFUNKTIONEN**
METHOD FOR THE CREATION OF ENVIRONMENTAL HYPOTHESES FOR DRIVER ASSISTANCE FUNCTIONS
PROCEDE POUR PRODUIRE DES HYPOTHESES RELATIVES A L'ENVIRONNEMENT EXTERIEUR POUR DES FONCTIONS D'ASSISTANCE AU CONDUCTEUR

(30) Priorität: 05.08.2005 DE 102005036953
(43) Veröffentlichungstag der Anmeldung: 23.04.2008
(73) Patentinhaber: ROBERT BOSCH GMBH, 70442 Stuttgart (DE)
(72) Erfinder: RANDLER, Martin, 88090 Immenstaad (DE); SCHWINDT, Oliver, 71277 Rutesheim (DE)
(86) Internationale Anmeldenummer: PCT/EP2006/063489
(87) Internationale Veröffentlichungsnummer: WO 2007/017308

(56) Entgegenhaltungen:
- EP-A- 0 582 236
- EP-A- 0 695 668
- WO-A-03/059680

## Beschreibung

### Stand der Technik

Die Erfindung betrifft ein Verfahren zum Erzeugen von Umwelthypothesen für mindestens eine Fahrerassistenzfunktion in einem Kraftfahrzeug, durch Auswertung von Sensordaten über die Umwelt des Fahrzeugs, sowie ein Fahrerassistenzsystem in dem das Verfahren implementiert ist.

Unter einem Fahrerassistenzsystem versteht man allgemein eine Einrichtung in einem Kraftfahrzeug, die den Fahrer bei der Führung des Fahrzeugs unterstützt. Ein Beispiel eines solchen Fahrerassistenzsystems ist etwa ein adaptiver Geschwindigkeitsregler, der auch als ACC-System (Adaptive Cruise Control) bezeichnet wird. Dieses System ermöglicht es, vorausfahrende Fahrzeuge mit Hilfe eines Sensors, typischerweise mit Hilfe eines Radarsensors, zu orten und die Geschwindigkeit des eigenen Fahrzeugs in Abhängigkeit von gemessenen Abstand zum vorausfahrenden Fahrzeug zu regeln, so daß das vorausfahrende Fahrzeug in einem angemessenen Sicherheitsabstand verfolgt wird.

Unter Fahrerassistenzsystemen sollen hier auch Sicherheitssysteme verstanden werden, die den Fahrer vor Gefahren warnen und/oder automatisch in die Fahrzeugführung eingreifen, um die Gefahren möglichst abzuwenden oder den Schaden zu begrenzen, oder die passive Sicherheitssysteme wie Airbags, Gurtstraffer und dergleichen, frühzeitig aktivieren, um die Unfallfolgen zu mildern. Systeme der letztgenannten Art werden z. B. als Pre-Crash-Systeme oder PSS-Systeme (Predictive Safety System) bezeichnet.

Allgemein umfaßt ein Fahrerassistenzsystem eine sensorische Komponente zur Erfassung des Verkehrsumfelds, einschließlich mindestens eines Sensors, etwa eines Radarsensors, und zugehöriger elektronischer Einrichtungen zur Datenaufbereitung, eine aktorische Komponente, die etwa in das Antriebssystem, das Bremssystem oder die Lenkung des Fahrzeugs eingreift und/oder eine Fahrerschnittstelle zur Ausgabe von Warnsignalen an den Fahrer aufweist, sowie eine Datenverarbeitungseinrichtung, die anhand der von der sensorischen Komponente bereitgestellten Daten die Steuersignale für die aktorische Komponente erzeugt.

Die Funktion der Datenverarbeitungseinrichtung beruht zumindest implizit auf einer oder mehreren Umwelthypothesen, die festlegen, in welcher Weise die Sensordaten interpretiert werden. Zum Beispiel könnte eine Umwelthypothese für die Assistenzfunktion ACC etwa wie folgt lauten: "Es existiert ein Folgefahrzeug (das vorausfahrende Fahrzeug), das in bezug auf das eigene Fahrzeug den Abstand d und die Relativgeschwindigkeit v hat". Dies wäre ein Beispiel für eine sogenannte Objekthypothese, die sich auf ein bestimmtes Objekt im Umfeld des eigenen Fahrzeugs befindet. Ein anderes Beispiel für eine Umwelthypothese wäre eine sogenannte Spurhypothese, etwa in der Form: "Das eigene Fahrzeug befindet sich auf der äußersten rechten Fahrspur der Fahrbahn" oder "Die Fahrspur hat einer Krümmung p und eine Breite B".

Bei bekannten Fahrerassistenzsystemen finden die Prozesse, die explizit oder implizit zur Erzeugung der Umwelthypothesen führen, zum einen Teil bereits bei der Datenaufbereitung in den verschiedenen Sensorsystemen statt, also etwa im Radarsensor oder einem Videosystem, und zum anderen Teil in der Datenverarbeitungseinrichtung, die zumeist durch einen Mikrorechner oder ein System von Mikrorechnern gebildet wird. Die von den sensorischen Komponenten ausgegebenen Daten sind bereits auf die angestrebte Assistenzfunktion abgestimmt, und umgekehrt ist die Programmierung der Datenverarbeitungseinrichtung an die zum Einsatz kommenden Sensorkomponenten angepaßt.

WO 03/059680 A beschreibt ein Verfahren und ein Fahrerassistenzsystem, bei dem die Datenverarbeitung in zwei Stufen erfolgt. In einer ersten Befehlsstufe werden Solldaten für die Assistenzfunktionen anhand der Umwelthypothesen berechnet, und zwar ohne Berücksichtigung des dynamischen Verhaltens des eigenen Fahrzeugs. In einer zweiten Befehlsstufe werden diese Solldaten dann unter Berücksichtigung des dynamischen Fahrzeugverhaltens aufbereitet.

### Vorteile der Erfindung

Die Erfindung mit den in Anspruch 1 angegebenen Merkmalen ermöglicht eine größerer Flexibilität bei der Konfiguration des Fahrerassistenzsystems und erleichtert es insbesondere, Sensorkomponenten auszutauschen oder neue Sensorkomponenten hinzuzufügen oder die Funktionalität des Fahrerassistenzsystems zu ändern oder zu erweitern.

Dies wird erreicht durch ein Verfahren zur Erzeugung von Umwelthypothesen, durch das die Sensorik und die Funktion des Fahrerassistenzsystems entkoppelt werden. In einem ersten Schritt werden auf der Seite der Sensorik die Sensordaten in einer funktionsunabhängigen Sensorsprache ausgegeben, und in einem zweiten Schritt werden die Sensordaten dann in eine sensorunabhängige Funktionssprache übersetzt, in der die Umwelthypothesen so repräsentiert werden, das sie von der Assistenzfunktion oder den Assistenzfunktionen ausgewertet werden können.

Da die Sensorsprache funktionsunabhängig ist, braucht man bei der Konfiguration der Sensorik noch nichts darüber zu wissen, welche Funktionen durch diese Sensorik bedient werden sollen und wie die Funktionen im einzelnen arbeiten. Umgekehrt wird bei der Programmierung und Ausführung der Assistenzfunktion oder Assistenzfunktionen das gesamte Wissen über die Umwelt des Fahrzeugs durch die in der Funktionssprache formulierten Umwelthypothesen repräsentiert, und es ist keine Kenntnis darüber erforderlich, mit Hilfe welcher Sensoren die Hypothesen erzeugt wurden und wie diese Sensoren arbeiten. Dies ermöglicht es, verschiedene Sensorkomponenten und Assistenzfunktionen in äußerst flexibler Weise miteinander zu kombinieren. Bei einer Änderung der Konfiguration sind weder auf Seiten der Sensorik noch auf Seiten der eigentlichen Assistenzfunktionen besondere Anpassungen erforderlich. Angepaßt zu werden braucht lediglich eine spezielles Datenverarbeitungsmodul, das die Umwelthypothesen erzeugt und das gewissermaßen die Schnittstelle zwischen der Sensorik und der Funktion oder den Funktionen darstellt.

Vorteilhafte Ausgestaltungen und Weiterbildungen der Erfindung ergeben sich aus den Unteransprüchen.

Bevorzugt ist die Sensorsprache auch fahrzeugunabhängig in dem Sinne, daß auf Seiten der Sensorik keine Informationen darüber vorhanden zu sein brauchen und vorhanden sind, in welchem Fahrzeug und an welcher Stelle im Fahrzeug der betreffende Sensor eingebaut ist. Diese Information ist erst auf der Ebene der Umwelthypothesen verfügbar und wird dort dazu benutzt, die Sensordaten, die sich jeweils auf ein sensorspezifisches Koordinatensystem beziehen, in Größen umzurechnen, die sich auf ein fahrzeugspezifisches Koordinatensystem beziehen und in der Funktionssprache verwendet werden. Auf diese Weise wird die Flexibilität weiter erhöht und die Anpassung des Fahrerassistenzsystems an neue oder andere Fahrzeugtypen erheblich erleichtert. Insbesondere können die Programm-Module, in denen die Kernfunktionen des Fahrerassistenzsystems implementiert sind, unverändert übernommen werden.

Da sich das Umfeld des Fahrzeugs während des Betriebs des Fahrerassistenzsystems dynamisch verändert, werden von der Sensorik fortlaufend aktualisierte Daten erfaßt. Typischerweise arbeiten die Sensoren periodisch, und jeder Sensor hat einen bestimmten Meßzyklus, innerhalb dessen die Daten aktualisiert werden. Damit die fortlaufend aktualisierten Daten richtig interpretiert werden können, muß deshalb das System insgesamt über eine Art Gedächtnis verfügen. Wenn beispielsweise ein Objekt in mehreren aufeinanderfolgenden Meßzyklen eines Radarsensors geortet wird, jeweils bei einer leicht unterschiedlichen Position, so muß das System in der Lage sein zu erkennen, daß es sich stets um ein und dasselbe Objekt handelt. Dies setzt bereits ein gewisses Maß an Hypothesenbildung über das Objekt voraus. Bevorzugt erfolgt deshalb bei dem erfindungsgemäßen Verfahren der Abgleich der aktuellen

Daten mit der "Historie", d. h., mit den früher erfaßten Daten, ebenfalls erst auf der Ebene der Hypothesenerstellung, während die Sensorik und die bei der Ausgabe der Sensordaten benutzten Sensorsprache "gedächtnisfrei" ist.

Die Erfindung erweist sich als besonders vorteilhaft, wenn die Daten verschiedener Sensorkomponenten miteinander fusioniert werden müssen. Die Meßzyklen der verschiedenen Sensoren sind nämlich im allgemeinen nicht miteinander synchronisiert, so daß die Daten über dasselbe Objekt von den verschiedenen Sensoren zu unterschiedlichen Zeiten erfaßt werden und deshalb nicht direkt miteinander vergleichbar sind. Bei dem Schritt der Übersetzung der Daten aus der Sensorsprache in die Funktionssprache werden die Daten aus den jeweiligen sensorspezifischen Koordinatensystemen in das fahrzeugspezifische Koordinatensystem umgerechnet, und außerdem erlaubt die Berücksichtigung der Historie, Hypothesen über die zeitliche Entwicklung der Objektzustände zu erstellen und die von verschiedenen Sensorkomponenten asynchron eintreffenden Daten zu interpolieren und zu synchronisieren, so daß die Daten von verschiedenen Sensoren, die sich auf dasselbe Objekt beziehen, "stetig" miteinander fusioniert werden können, so daß man letztlich eine auf den Daten mehrerer Sensoren beruhenden, jedoch sensorunabhängig formulierte Objekthypothese erhält.

Bei der Auswertung der Umwelthypothesen im Rahmen der eigentlichen Fahrerassistenzfunktionen spielt die Frage eine wesentliche Rolle, wie genau und wie verläßlich die jeweiligen Umwelthypothesen sind. Die Genauigkeit und Verläßlichkeit der Hypothesen ist ihrerseits von der Beschaffenheit, den Einsatzbedingungen und der Anzahl der beteiligten Sensoren abhängig. Um auch in diesem Zusammenhang eine Entkopplung zwischen Sensorik und Funktion zu erreichen, enthält vorzugsweise die Sensorsprache verschiedene Größen und Parameter, die über die Datenqualität Auskunft geben, beispielsweise das Signal-Rausch-Verhältnis, die Fehlertoleranzen oder die Streuung der einzelnen Meßgrößen. Auch diese Qualitätsdaten sind jeweils sensorspezifisch und nicht speziell auf eine bestimmte Assistenzfunktion bezogen. Erst bei der Übersetzung in die Funktionssprache werden diese Qualitätsgrößen in entsprechende Qualitätsparameter wie Existenzwahrscheinlichkeiten, Streubreiten und dergleichen der Größen umgerechnet, die die betreffende Umwelthypothese kennzeichnen. Durch Rückgriff auf die Historie kann dabei auch die statistische Schwankung der Daten in der Vergangenheit berücksichtigt werden. Ebenso läßt sich im Zuge der Sensordatenfusion berücksichtigen, in wieweit die von verschiedenen Sensoren erhaltenen Daten einander bestätigen oder sich widersprechen.

In die Erstellung und Bewertung der Umwelthypothesen fließen vorzugsweise auch bestimmte funktionsspezifische Annahmen ein, die es gestatten, eine Hypothese als plausibel oder unplausibel zu bewerten.

Sofern das Fahrerassistenzsystem mehrere voneinander unabhängige Assistenzfunktionen aufweist, die jedoch auf gemeinsame Sensordaten zugreifen, ist es zweckmäßig, die Umwelthypothesen für die verschiedenen Funktionen in einen gemeinsamen Verarbeitungsschritt und/oder einen gemeinsamen Datenverarbeitungsmodul, einer "Informationsplattform" zu erstellen, so daß Synergien bei der Datenauswertung ausgenutzt werden können.

### Zeichnung

Ausführungsbeispiele der Erfindung sind in den Zeichnungen dargestellt und in der nachfolgenden Beschreibung näher erläutert:

Es zeigen:
Figur 1 ein Blockdiagramm eines erfindungsgemäßen Fahrerassistenzsystems; und
Figur 2 ein Blockdiagramm eines Fahrerassistenzsystems gemäß einem anderen Ausführungsbeispiel.

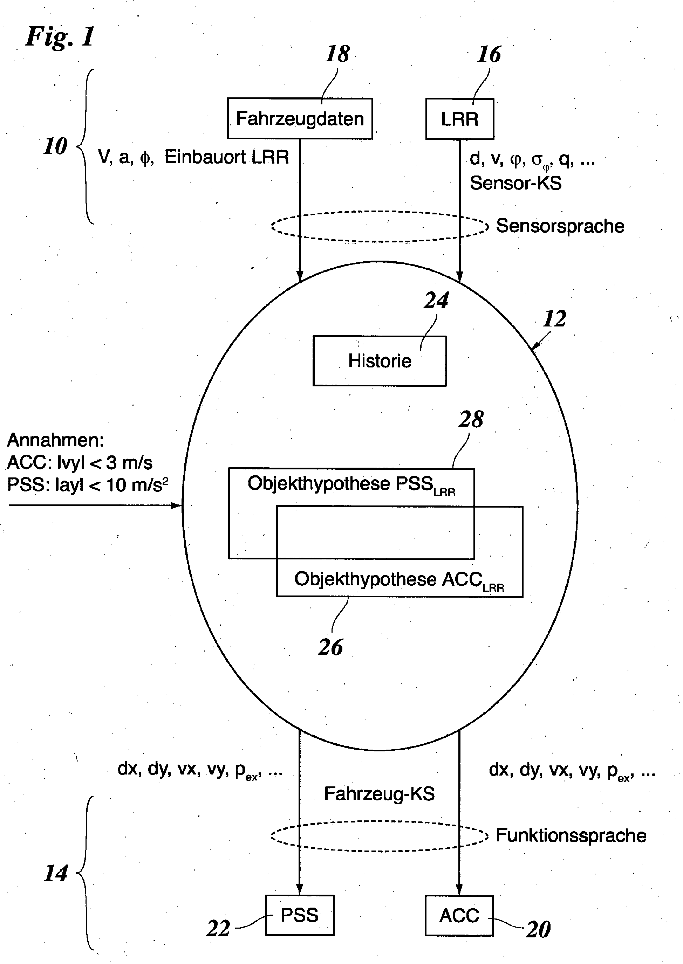

Figur 1 ist ein Fahrerassistenzsystems für ein Kraftfahrzeug als stark vereinfachtes Blockdiagramm dargestellt. Dieses Fahrerassistenzsystem gliedert sich grob in drei Stufen: eine Sensorik-Stufe 10, eine Informationsplattform 12 und eine Funktionsstufe 14. Die Sensorik-Stufe 10 umfaßt im gezeigten Beispiel einen vorn im Fahrzeug eingebauten Radarsensor 16 (LRR = Long Range Radar), der insbesondere zur Ortung vorausfahrender Fahrzeuge dient, und eine Eigenfahrzeugsensorik 18, die Daten über das "eigene" Fahrzeug bereitstellt, also das Fahrzeug, das mit dem Fahrerassistenzsystem ausgerüstet ist. Die Funktionsstufe 14 umfaßt im gezeigten Beispiel zwei Assistenzfunktionen, nämlich eine Assistenzfunktion 20 zur adaptiven Geschwindigkeitsregelung (ACC = Adaptive Cruise Control) und eine Assistenzfunktion 22 eines Sicherheitssystems (PSS = Predictive Safety System). Mit der Assistenzfunktion 20 (ACC) wird die Geschwindigkeit des eigenen Fahrzeugs entweder auf eine vom Fahrer gewählte Wunschgeschwindigkeit geregelt, wenn kein vorausfahrendes Fahrzeug in der eigenen Spur vorhanden ist (Freifahrt), oder, falls ein solches Fahrzeug vorhanden ist (Folgefahrt), erfolgt eine Abstandsregelung auf einen vorgegebenen Sollabstand oder eine Soll-Zeitlücke zu diesem Fahrzeug. Die Assistenzfunktion 22 (PSS) dient beispielsweise dazu, passive Sicherheitssysteme des Fahrzeugs, etwa Airbags und Gurtstraffer, auf eine bevorstehende und voraussichtlich nicht mehr abwendbare Kollision vorzubereiten. Sie kann jedoch auch Maßnahmen enthalten, mit denen versucht wird, die Kollision doch noch abzuwenden oder zumindest die Kollisionsfolgen zu mildern, beispielsweise durch Vorbefüllung der Bremsdruckzylinder, um ein rascheres Ansprechen der Fahrzeugbremse zu ermöglichen, oder gegebenenfalls auch die automatische Einleitung einer Notbremsfunktion.

Der grundlegende Aufbau der Sensorik-Stufe 10 und der Funktionsstufe 14 sind als solche bekannt und sollen deshalb hier nicht näher erläutert werden. Die Funktionsstufe 14 wird durch ein elektronisches Datenverarbeitungssystems mit zugehöriger Software gebildet und wertet Daten aus, die von der Sensorik-Stufe 10 in elektronischer Form bereitgestellt werden. Dies impliziert, daß auch die Sensorkomponenten der Sensorik-Stufe bereits elektronische Komponenten zur Datenvorverarbeitung enthalten.

Die Informationsplattform 12 dient dazu, anhand der Daten der Sensorik-Stufe 10 Umwelthypothesen zu erstellen, insbesondere Objekthypothesen, d. h. Hypothesen über die vom Radarsensor 16 georteten Objekte wie z. B. vorausfahrende Fahrzeuge oder sonstige Hindernisse. Diese Umwelthypothesen bilden dann die Grundlage für die Ausführung der eigentlichen Assistenzfunktionen der Funktionsstufe 14.

Während bei herkömmlichen Fahrerassistenzsystemen die Sensorik-Stufe 10 und die Funktionsstufe 14 direkt miteinander kommunizieren und die Hypothesenbildung implizit durch Verarbeitungsprozesse erfolgt, die auf die Elektronik der Sensorik-Stufe 10 und der Funktionsstufe 14 verteilt sind, besteht die Besonderheit des hier vorgeschlagenen Fahrerassistenzsystems darin, daß die Hypothesenbildung explizit in der Informationsplattform 12 stattfindet, die als Schnittstelle zwischen der Sensorik-Stufe 10 und der Funktionsstufe 14 fungiert und als eigenständiges Modul, beispielsweise als Softwaremodul im elektronischen Datenverarbeitungssystem ausgebildet ist, das an unterschiedliche Sensorkomponenten oder Kombinationen von Sensorkomponenten einerseits sowie an unterschiedliche Assistenzfunktionen andererseits adaptierbar ist.

Diejenigen Informationen, die benötigt werden, um die von der Sensorik-Stufe 10 ausgegebenen Daten in die Daten zu übersetzen, die letztlich in der Funktionsstufe 14 verarbeitet werden, sind in der Informationsplattform 12 konzentriert. Das bedeutet, daß beispielsweise in der Elektronik des Radarsensors 16, die zur Vorverarbeitung und Ausgabe der Sensordaten dient, keine Information darüber vorhanden ist, an welcher Stelle im Fahrzeug der betreffende Sensor eingebaut ist, und ebensowenig verfügt der Radarsensor 16 über Information, die sich auf die Interpretation der Meßdaten bezieht. Bildlich gesprochen "weiß" der Radarsensor 16 ist, worum es sich bei den von ihm georteten Objekten handelt, ob z. B. um Fahrzeuge, Flugzeuge, stehende Objekte oder dergleichen. Schließlich ist im Radarsensor 16 auch keine Information darüber vorhanden, für welche Assistenzfunktionen die Sensordaten verwendet werden sollen. Das Format, in dem die Sensordaten vom Radarsensor 16 ausgegeben werden, entspricht somit einer funktions- und fahrzeugunabhängigen Sensorsprache. Dementsprechend beziehen sich auch die vom Radarsensor 16 ausgegebenen Daten nicht etwa auf ein Koordinatensystem des Fahrzeugs, sondern auf ein sensorspezifisches Koordinatensystem. Beispielsweise werden die Orte der vom Sensor georteten Objekte in Polarkoordinaten angegeben, d. h. durch den Abstand d, mit dem Sensor als Koordinatenursprung, und dem Azimutwinkel ϕ in bezug auf die optische Achse des Sensors. Die Relativgeschwindigkeit v der georteten Objekte wird anhand der Doppelverschiebung des Radar-Echos gemessen und ist definiert als die zeitliche Ableitung des Abstands d.

Darüber hinaus umfassen die vom Radarsensor 16 ausgegeben Sensordaten verschiedene Größen σ_{ϕ}, q, die Auskunft über die Verläßlichkeit oder Genauigkeit der Meßdaten geben. Zum Beispiel wird der Azimutwinkel ϕ durch Auswertung der Phasenbeziehung von Signalen bestimmt, die von mehreren seitlich gegeneinander versetzen Antennenpatches des Radarsensors empfangen werden. Dabei erhält man keinen scharf definierten Wert für den Azimutwinkel, sondern eine bestimmte Winkelverteilung mit der Streuung σ_{ϕ}. Bei der Größe q kann es sich beispielsweise um das Signal/Rausch-Verhältnis des Signals für das geortete Objekt handeln und/oder um die Stabilität des Objekts, z. B. die Anzahl von Detektionen, mit denen das Objekt in mehreren aufeinander folgenden Meßzyklen geortet wird (zumeist wird diese letztere Information allerdings erst in einer späteren Verarbeitungsstufe zur Verfügung stehen).

Wenn es sich bei dem Radarsensor 16 beispielsweise um ein FMCW-Radar handelt (Fequency Modulated Continous Wave), so erhält man für jedes geortete Objekt einen Peak im Frequenzspektrum des empfangenen Signals. Die Lage dieses Peaks ist sowohl vom Abstand d als auch von der Relativgeschwindigkeit v abhängig, so daß das Signal insoweit mehrdeutig ist. Zur Beseitigung dieser Mehrdeutigkeit wird das gesendete Radarsignal innerhalb jedes Meßzyklus mit mindestens zwei unterschiedlichen Rampensteigungen moduliert. Der Abstand d und die Relativgeschwindigkeit v können dann aus der Lage des Peaks in den Spektren für die beiden verschiedenen Rampen bestimmt werden. Wenn sich mehrere Objekt gleichzeitig im Ortungsbereich des Radarsensors befinden, entsteht eine zusätzliche Mehrdeutigkeit hinsichtlich der Zuordnung der einzelnen Peaks zu den betreffenden Objekten. Diese Mehrdeutigkeit kann durch Auswertung eines Spektrums für mindestens eine zusätzliche Rampe mit wiederum einer anderen Rampensteigung beseitigt werden. Die Beseitigung dieser Mehrdeutigkeiten erfolgt durch Datenvorverarbeitung in der Elektronik des Radarsensors 16, also auf der Sensorik-Stufe 10.

Die in der Sensorsprache ausgegebenen Daten des Radarsensors 16 sind auch "gedächtnisfrei" in dem Sinne, daß sie sich jeweils nur auf den aktuellen Meßzyklus des Radarsensors beziehen. Das schließt nicht aus, daß auf der Sensorik-Stufe 10 bereits eine gewisse Datenspeicherung erfolgt, gegebenenfalls auch über mehrere Meßzyklen hinweg. Beispielsweise ist natürlich für die Auswertung der auf verschiedenen Rampen aufgenommenen Spektren eine gewisse Zwischenspeicherung der Daten erforderlich, und zur einfacheren oder schnelleren Beseitigung der Mehrdeutigkeit bei mehreren Objekten kann auch bereits auf Daten aus vorangegangenen Meßzyklen zurückgegriffen werden. Ebenso erfolgt u. U. ein Rückgriff auf Daten aus vorangegangenen Meßzyklen bei der Bestimmung des Qualitätsparameters q, der die Anzahl der Detektionen oder die Stabilität des Signals angibt. Entscheidend ist jedoch, daß die Daten, die für jedes geortete Objekt letztlich an die Informationsplattform 12 ausgegeben werden, sich nur auf den aktuellen Meßzyklus beziehen. Entsprechendes gilt auch die übrigen Sensorkomponenten der Sensorik-Stufe 10.

Die Eigenfahrzeugsensorik 18 liefert Daten über das eigene Fahrzeug, die mit geeigneten Sensoren an Bord des Fahrzeugs erfaßt werden, beispielsweise die Fahrgeschwindigkeit V, die aktuelle Beschleunigung a des Fahrzeugs (in Längsrichtung), die aktuelle Giergeschwindigkeit φ des Fahrzeugs sowie gegebenenfalls die Gierbeschleunigung und dergleichen. Daneben sind für das Fahrerassistenzsystem verschiedene Fahrzeugdaten relevant, die nicht zwingend mit einem Sensor erfaßt werden müssen, sondern beispielsweise auch als fahrzeugspezifische Parameter fest eingegeben werden können. Ein wichtiges Beispiel hierfür sind die Daten, die den Einbauort des Radarsensors 16 im Fahrzeug sowie die Justierung des Sensors kennzeichnen. Diese Daten werden hier der Einfach halber der Eigenfahrzeugsensorik 18 zugerechnet.

Erst auf der Stufe der Informationsplattform 12 sind somit die Informationen verfügbar, die benötigt werden, die Sensordaten der verschiedenen Sensorkomponenten, im gezeigten Beispiel des Radarsensors 16, auf das eigene Fahrzeug zu beziehen. Insbesondere erfolgt auf dieser Stufe die Umrechnung der Sensordaten aus dem sensorspezifischen Koordinatensystem in ein fahrzeugspezifisches Koordinatensystem, beispielsweise ein kartesisches Koordinatensystem, dessen x-Achse in Längsrichtung des Fahrzeugs durch die Fahrzeugmitte verläuft.

Ebenso werden erst auf der Stufe der Informationsplattform 12 die "gedächtnislosen" Sensordaten mit der Historie, d. h., mit entsprechenden Daten aus vorangegangenen Meßzyklen verknüpft, so daß sich die Ortungsdaten der verschiedenen Objekte über einen Zeitraum von mehreren Meßzyklen verfolgen lassen, eine Prozedur, die allgemein als Tracking-Prozedur bekannt ist. Zu diesem Zweck weist die Informationsplattform 12 ein Tracking-Modul 24 auf. Das Tracking erfolgt vorzugsweise bereits in dem fahrzeugspezifischen Koordinatensystem. Dies erlaubt es insbesondere in den Fällen, in denen mehrere Sensorkomponenten vorhanden sind, die Sensordaten der verschiedenen Sensorkomponenten bei der Tracking-Prozedur zu berücksichtigen, d. h. die Sensordaten zu "fusionierten". Dabei findet bereits eine gewisse Interpretation der Sensordaten in dem Sinne statt, daß die Daten verschiedener Sensoren ein und demselben Objekt zugeordnet werden.

Eine wesentliche Funktion der Informationsplattform 12 ist die Erstellung von Objekthypothesen, d. h., die Erstellung von Hypothesen über die Natur der Objekte, die durch die Sensordaten repräsentiert werden. Beispielsweise erlaubt ein Vergleich der vom Radarsensor 16 gemessenen Relativgeschwindigkeit v eines Objekts mit der Fahrgeschwindigkeit V des eigenen Fahrzeugs die Entscheidung, ob es sich bei dem Objekt um ein stehendes Objekt oder aber ein bewegliches Objekt, beispielsweise ein vorausfahrendes Fahrzeug oder ein entgegenkommendes Fahrzeug handelt. Je nach Art der Funktion oder Funktionen, die auf der Funktionsstufe 14 auszuführen sind, können bestimmte Klassen von Objekten bei der weiteren Auswertung ignoriert werden. Beispielsweise werden bei herkömmlichen ACC-Funktionen (soweit sie keine Stop and Go Funktion einschließen) üblicherweise nur bewegliche Ziele berücksichtigt, die sich in Fahrtrichtung. Sofern stehende Objekte nicht für eine andere Assistenzfunktion benötigt werden, können sie somit von vornherein verworfen werden, wodurch sich auch die Arbeitsbelastung des Tracking-Moduls 24 reduziert.

Auch unter anderen Gesichtspunkten sind die Objekthypothesen sowie die Kriterien, nach denen die Hypothesen erstellt werden, jeweils spezifisch an eine bestimmte Assistenzfunktion angepaßt. Demgemäß sind in Figur 1 innerhalb der Informationsplattform 12 symbolisch zwei Objekthypothesen 26, 28 dargestellt. Bei diesen Objekthypothesen handelt es sich um Datenstrukturen, die jeweils einen Satz von Kriterien zur Definition des Objekts und/oder zur Einordnung des Objekts in eine von mehreren Objektkategorien sowie einen Satz von Variablen umfassen, die das Objekt in einer auf die jeweilige Assistenzfunktion abgestimmten Funktionssprache beschreiben. Diese Variablen sind, soweit sie sich auf die Orts- und Bewegungsdaten der Objekte beziehen, im fahrzeugspezifischen Koordinatensystem angegeben. In Figur 1 umfassen diese Variablen beispielsweise die Ortskoordinaten dx und dy des Objekts in bezug auf den Ursprung des fahrzeugfesten Koordinatensystems, die Relativgeschwindigkeit vx des Objekts in Längsrichtung des Fahrzeugs, die Relativgeschwindigkeit vy des Objekts in Querrichtung des Fahrzeugs und dergleichen. Weiterhin umfassen diese Variablen im gezeigten Beispiel für jedes Objekt mindestens einen Parameter pₑₓ, die sogenannte Existenzwahrscheinlichkeit, d. h. die Wahrscheinlichkeit dafür, daß das Objekt, das durch die Orts- und Bewegungsdaten beschrieben wird, tatsächlich existiert bzw. die Definitionskriterien für die betreffende Objektkategorie erfüllt. Beispielsweise ist für die ACC-Funktion eine Objekthypothese "Folgefahrtobjekt" definiert. Damit ist das in der eigenen Spur unmittelbar vorausfahrende Fahrzeug gemeint, auf das die Abstandsregelung erfolgen soll. Die Existenzwahrscheinlichkeit pₑₓ ist dann von der Wahrscheinlichkeit dafür abhängig, daß diesem Objekt tatsächlich gefolgt wird. In die Berechnung dieser Wahrscheinlichkeit kann insbesondere auch die vom Radarsensor 16 gelieferte Größe σ_{ϕ} einfließen.

In ähnlicher Weise kann der Variablensatz zu einer Objekthypothese verschiedene andere Größen enthalten, die die Genauigkeit oder Verläßlichkeit der (nun auf das fahrzeugspezifische Koordinatensystem bezogenen) Orts- und Bewegungsdaten kennzeichnen, beispielsweise Toleranzgrenzen, Streuungen und gegebenenfalls auch statische Schwankungen, die durch Auswertung der Historie bestimmt wurden.

Die Variablensätze der Objekthypothesen 26, 28 werden zwar durch Umrechnung oder Übersetzung aus den Sensordaten berechnet, beschreiben jedoch ausschließlich das betreffende Objekt im fahrzeugspezifischen Koordinatensystem und lassen sich deshalb von der betreffenden Assistenzfunktion 20 oder 22 auswerten, ohne daß irgendwelche Information darüber verfügbar sein muß, mit welchem speziellen Sensor oder mit Hilfe welcher Kombination von Sensoren die betreffenden Informationen gewonnen wurden. Die Funktionssprache, in der die Daten an die Funktionsstufe 14 ausgegeben werden, ist insoweit sensorunabhängig.

In dem in Figur 1 gezeigten Beispiel sind die Variablensätze, die an die beiden Assistenzfunktionen 20 und 22 ausgegeben werden, zwar formal die gleichen, doch können ihre jeweiligen Werte und ihre Bedeutungen sich unterscheiden, da sie jeweils speziell auf die betreffende Funktion abgestimmt sind. Wenn beispielsweise ein Objekt geortet wird, das eine so geringe Absolutgeschwindigkeit hat, daß es sich unter Berücksichtigung der Meßungenauigkeiten auch um ein stehendes Objekt handeln könnte, so wird in der entsprechenden Objekthypothese 26 für die ACC-Funktion die Existenzwahrscheinlichkeit pₑₓ für ein "Folgefahrtobjekt" sehr klein sein, während in der Objekthypothese 28 die Existenzwahrscheinlichkeit pₑₓ für ein Objekt "Hindernis", bei dem es sich auch um ein stehendes Hindernis handeln könnte, deutlich größer sein wird. Ähnlich werden die Größen dx in der Objekthypothese 26 für ACC in der Regel den wahrscheinlichsten Wert für den betreffenden Objektabstand angeben, während bei der Objekthypothese 28 für die Sicherheitsfunktion PSS eher vom ungünstigsten Fall ausgegangen wird, so daß dx hier den im Rahmen der Meßgenauigkeit kleinstmöglichen Abstand des Objekts repräsentieren wird. Somit können in der Funktionssprache die Bedeutungen der einzelnen Variablen von Funktion zu Funktion verschieden sein.

Nichts desto weniger werden die Variablen in den Objekthypothesen 26 und 28 in der Regel einen gemeinsamen Ursprung haben und teilweise sogar identisch sein oder zumindest in einem gegenseitigen Abhängigkeitsverhältnis stehen. Deshalb ist es zweckmäßig, die Objekthypothesen 26 und 28 in einer gemeinsamen Prozedur zu erstellen, so daß Rechenarbeit für unnötige Parallel- oder Doppelberechnungen eingespart werden kann. Dies wird in Figur 1 dadurch symbolisiert, daß sich die Blöcke für die Objekthypothesen 26 und 28 überlappen.

In die Definitionskriterien für die verschiedenen Objekthypothesen fließen außerdem in der Informationsplattform 12 bestimmte Annahmen ein, die die physikalischen Rahmenbedingungen repräsentieren, die für die jeweilige Assistenzfunktion relevant sind. Beispielsweise ist es im Rahmen der ACC-Funktion eine plausible Annahme, daß das Folgefahrtobjekt nur eine relativ geringe Quergeschwindigkeit vy aufweisen muß, also beispielsweise |vy|†<†3 m/s. Für eine Objekthypothese "Hindernis" im Rahmen der PSS-Funktion braucht dies hingegen nicht zu gelten. Hier ist allerdings z. B. die Annahme plausibel, daß der Betrag der Querbeschleunigung ay nicht mehr als beispielsweise 10 m/s² betragen wird. Die Erfüllung oder Nichterfüllung dieser Annahmen wird insbesondere die Existenzwahrscheinlichkeit pₑₓ beeinflussen und gegebenenfalls dazu führen, daß die Hypothese vollständig verworfen wird.

Wie aus der vorstehenden Beschreibung hervorgeht, ist bei dem vorgeschlagenen Fahrerassistenzsystem die Informationsplattform 12 der Ort, an dem die Sensordaten aus der funktiononsunabhängigen Sensorsprache in die sensorunabhängige Funktionssprache für die betreffenden Funktionen übersetzt wird und an dem die für diese Übersetzung notwendige Information konzentriert ist, insbesondere plausible Annahmen bezüglich der betroffenen Assistenzfunktionen sowie Informationen über das eigene Fahrzeug und die Anzahl und den Typ der in der Sensorik-Stufe 10 vorhandenen Sensorkomponenten sowie ihrer Einbauorte im Fahrzeug. Wenn nun beispielsweise der Radarsensor 16 in einem anderen Fahrzeug oder an anderer Stelle in demselben Fahrzeug eingebaut wird, so bleibt dies auf die Implementierung der eigentlichen Assistenzfunktionen 20 und 22 ohne Einfluß, und es braucht lediglich die Informationsplattform 12 angepaßt zu werden. Dasselbe gilt beispielsweise auch dann, wenn der Radarsensor 16 durch ein Videosystem ersetzt wird oder wenn zusätzliche Sehsorkomponenten hinzugefügt werden. Umgekehrt sind auch an den beteiligten Sensorkomponenten keinerlei Anpassungen erforderlich, wenn die Assistenzfunktionen 20, 22 verändert werden oder neue Funktionen hinzugefügt werden. Auch in diesem Fall braucht lediglich die Informationsplattform 12 angepaßt zu werden.

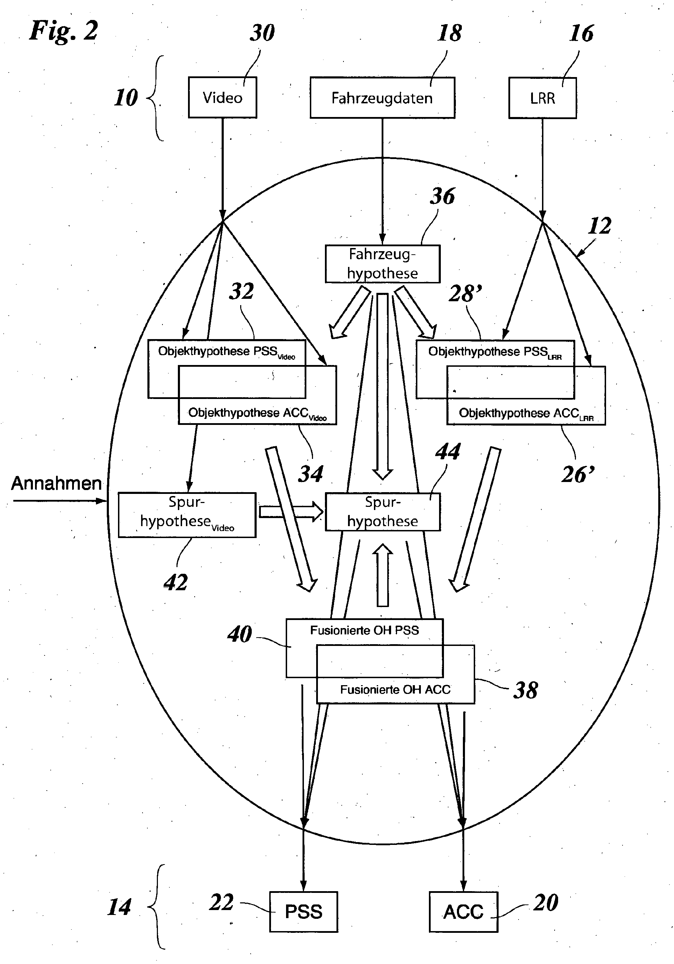

In Figur 2 ist für ein modifiziertes Ausführungsbeispiel die Informationsplattform 12 detaillierter dargestellt.

In diesem Beispiel ist neben der Fahrzeugeigensensorik 18 und dem Radarsensor 16 als zweite Sensorkomponente zur Ortung von Objekten ein Videosystem 30 vorgesehen. Alle drei Sensorkomponenten der Sensorik-Stufe 10 melden die Sensordaten in ihrer jeweiligen Sensorsprache an die Informationsplattform 12, die in diesem Fall zugleich die Funktion hat, für eine Datenfusion zwischen den Daten des Radarsensors 16 und des Videosystems 30 zu sorgen.

Zunächst wird anhand der Daten der jeweiligen Sensorkomponente eine sensorspezifische Umwelthypothese gebildet. Im Fall des Radarsensors 16 sind dies die Objekthypothesen 26' und 28' für die Assistenzfunktionen 20 und 22. Diese Objekthypothesen beruhen ausschließlich auf den Daten des Radarsensors 16. Entsprechend werden anhand der Daten des Videosystems 30 Objekthypothesen 32 und 34 für die beiden Assistenzfunktionen gebildet. Es liegt in der Logik des hier vorgeschlagenen Konzepts einer Informationsplattform, daß auch aus den Daten der Fahrzeugeigensensorik 18 eine Umwelthypothese gebildet wird, in diesem Fall eine Fahrzeughypothese 36. Eine solche Fahrzeughypothese könnte beispielsweise besagen: "Das eigene Fahrzeug fährt geradeaus" oder, Sofern die Fahrzeugeigensensorik 18 mit einem elektronischen Stabilitätssystem verbunden ist, das Informationen über den Reibungskoeffizienten der Fahrbahn liefert: "Das Fahrzeug fährt auf glatter Fahrbahn".

Fahzeughypothesen dieser Art haben naturgemäß Einfluß auf die Erstellung der Objekthypothesen 26', 28', 32 und 34, wie in Figur 2 durch dicke, in Umrißlinien dargestellte Pfeile symbolisiert wird. Beispielsweise hat ein bevorstehender Spurwechsel Einfluß darauf, ob ein geortetes Objekt noch als Folgefahrtobjekt zu qualifizieren ist. Die Objekthypothese "Hindernis" für die PSS-Funktion kann auf der Annahme beruhen, daß eine relevantes Hindernis höchstens einen bestimmten Maximalabstand zum eigenen Fahrzeug haben darf, und es kann zweckmäßig sein, diesen Maximalabstand vom Straßenzustand abhängig zu machen.

Aus den beiden sensorspezifischen (jedoch bereits in Funktionssprache formulierten) Objekthypothesen 26' und 34 für die ACC-Funktion wird dann eine fusionierte Objekthypothese 38 gebildet, die somit die mit Hilfe des Radarsensors 16 und mit Hilfe des Videosystems 30 gewonnenen Informationen zusammenfaßt. Entsprechend wird aus den beiden sensorspezifischen Objekthypothesen 28' und 32 für die PSS-Funktion eine fusionierte Objekthypothese 40 für die PSS-Funktion gebildet. Da in der Informationsplattform 12 auch die Historie der Sensordaten ausgewertet wird, brauchen die Meßzyklen des Radarsensors 16 und des Videosystems 30 nicht miteinander synchronisiert zu sein. Die zeitabhängigen Variablen in den Objekthypothesen 26', 34 und 28', 32 lassen sich aufgrund der bekannten Zeitabhängigkeit jeweils so interpolieren, daß man Größen erhält, die sich auf denselben Zeitpunkt beziehen und somit direkt miteinander vergleichbar sind und sich zu der fusionierten Objekthypothese verschmelzen lassen.

Bei der Implementierung der Informationsplattform 12 nach Figur 2 kann das Modul, das die Objekthypothesen 26' und 28' erstellt, mit dem entsprechenden Modul in Figur 1 identisch sein. Die Erstellung der fusionierten Objekthypothesen 38 und 40 erfolgt dann in einem besonderen Modul, das als Eingangsdaten die bereits in der jeweiligen Funktionssprache formulierten Hypothesenbeschreibungen empfängt und offen ist, diese Beschreibungen durch Daten zu ergänzen, die von anderen Objekthypothesen erhalten werden, beispielsweise von den Objekthypothesen 32 und 34 oder von sensorspezifischen Objekthypothesen für andere (in Figur 2 nicht gezeigt) Sensorkomponenten. Durch einen solchen modularen Aufbau wird eine hohe Flexibilität des Systems erreicht.

Die Sensordaten des Videosystems 30 dienen im gezeigten Beispiel dazu, noch eine weitere sensorspezifische Umwelthypothese zu bilden, nämlich eine Spurhypothese 42. Mit Hilfe des Videosystems lassen sich nämlich nicht nur Objekte wie andere Fahrzeuge und dergleichen erkennen, sondern auch Fahrspurmarkierungen auf der Fahrbahn, Fahrbahnrandmarkierungen, Leitplanken und/oder sonstige Fahrbahnbegrenzungen. Dies ermöglicht es, genauer als dies allein mit einem Radarsystem möglich wäre, die Fahrbahnspur zu identifizieren, auf der sich das eigene Fahrzeug befindet, sowie auch den Verlauf der Fahrspuren, und dementsprechend eine Spurhypothese zu generieren, etwa in der Form: "das eigene Fahrzeug befindet sich auf der äußersten rechten Spur und diese hat eine Krümmung k nach links". Die allein anhand der Videodaten erstellte Spurhypothese 42 wird dann mit der Fahrzeughypothese 36 zu eine allgemeinen Spurhypothese 44 fusioniert, so daß auch die Daten der Fahrzeugeigensensorik (beispielsweise über Lenkaktionen) in die Spurhypothese einfließen können. Ergänzend können auch die Informationen aus den fusionierten Objekthypothesen 38 und 40 einfließen, beispielsweise aufgrund der plausiblen Annahme, daß sich sicher erkannte bewegliche Objekte (Fahrzeuge) nicht außerhalb der Fahrbahngrenzen befinden werden.

Entsprechend können anhand der Videodaten auch Umwelthypothesen gebildet werden die sich auf spezielle Fahrsituationen beziehen, z.B. die Erkennung von Einscherern.

An die Assistenzfunktionen 20 und 22 werden dann in der jeweiligen Funktionssprache nicht nur die fusionierten Objekthypothesen 38 und 40 ausgegeben, sondern auch die Fahrzeughypothese 36 sowie die Spurhypothese 44, so daß der jeweiligen Assistenzfunktion ein differenziertes Bild der Umwelt zur Verfügung steht, ohne daß die Assistenzfunktion "wissen" muß, welche Sensoren welche Beiträge zu diesem Bild geliefert haben. Die Anpassung an unterschiedliche Assistenzfunktionen und/oder an unterschiedliche Kombinationen von Sensorkomponenten erfolgt auch hier wieder allein auf der Stufe der Informationsplattform 12.

## Patentansprüche

1. Verfahren zum Erzeugen von Umwelthypothesen (26, 28; 32, 34, 38, 40) für mindestens eine Fahrerassistenzfunktion (20, 22) in einem Kraftfahrzeug, durch Auswertung von Sensordaten über die Umwelt des Fahrzeugs, **gekennzeichnet durch** die folgenden Schritte: ,
- Ausgabe der Sensordaten in einer fahrerassistenzfunktionsunabhängigen Sensorsprache,
- Übersetzen der Sensorsprache in eine sensorunabhängige Fahrerassistenzfunktionssprache, für die mindestens eine Fahrerassistenzfunktion.

2. Verfahren nach Anspruch 1, zum Erzeugen von Objekthypothesen über von mindestens einem Sensor (16, 30) geortete Objekte, **dadurch gekennzeichnet, daß** die Ortungszeiten der Objekte in der Sensorsprache jeweils in einem sensorspezifischen Koordinatensystem angegeben sind und bei der Übersetzung in die Funktionssprache in ein fahrzeugspezifisches Koordinatensystem umgerechnet werden.

3. Verfahren nach Anspruch 1 oder 2, **dadurch gekennzeichnet, daß** die Sensordaten von den Sensoren (16, 30) periodisch gemessen und ausgegeben werden und sich in der Sensorsprache jeweils nur auf den aktuellen Meßzyklus beziehen und daß bei der Erstellung der Umwelthypothesen in der Funktionssprache die Historie der in aufeinanderfolgenenden Meßzyklen erhaltenen Sensordaten berücksichtigt wird.

4. Verfahren nach einem der vorstehenden Ansprüche, **dadurch gekennzeichnet, daß** Umwelthypothesen (26, 28; 38, 40) für mehrere Assistenzfunktionen (20, 22) gemeinsam und auf der Grundlage derselben Sensordaten erzeugt werden.

5. Verfahren nach einem der vorstehenden Ansprüche, **dadurch gekennzeichnet, daß** bei der Erstellung der Umwelthypothesen (38, 40) Sensordaten mehrerer Sensoren (16, 30) miteinander fusioniert werden.

6. Verfahren nach Anspruch 5, **dadurch gekennzeichnet, daß** aufgrund der Daten jedes einzelnen Sensors (16, 30) zunächst sensorspezifische Umwelthypothesen (26', 28'; 32, 34) erzeugt werden, die dann in einem weiteren Schritt zu Umwelthypothesen (38, 40) für die Assistenzfunktionen (20, 22) fusioniert werden.

7. Verfahren nach einem der vorstehenden Ansprüche, **dadurch gekennzeichnet, daß** die Umwelthypothesen sowohl Objekthypothesen (26, 28; 38, 40) als auch Spurhypothesen (42, 44) umfassen.

8. Verfahren nach Anspruch 7, **dadurch gekennzeichnet, daß** die Spurhypothese (44) durch Fusion von Daten mindestens eines Sensors (30) zur Objektortung mit Daten einer Eigenfahrzeugsensorik (18) erzeugt werden.

9. Fahrerassistenzsystem für Kraftfahrzeuge, mit mindestens einer Assistenzfunktion (20, 22) und mindestens einem Sensor (16, 18) zur Erfassung der Umwelt des Fahrzeugs, **gekennzeichnet durch** eine Informationsplattform (12), die eine Schnittstelle zwischen den Sensoren (16, 30) einerseits und den Assistenzfunktionen (20, 22) andererseits bildet und dazu ausgebildet ist, das Verfahren nach einem der Ansprüche 1 bis 8 auszuführen.

10. Fahrerassistenzsystem nach Anspruch 9, **dadurch gekennzeichnet, daß** Information über Art und Anzahl der vorhandenen Sensoren (16, 30), über den Einbauort dieser Sensoren im Fahrzeug sowie über Art und Anzahl der implementierten Assistenzfunktionen (20, 22) in der Informationsplattform (12) konzentriert ist.

## Claims

1. Method for generating environmental hypotheses (26, 28; 32, 34, 38, 40) for at least one driver assistance function (20, 22) in a motor vehicle, by evaluating sensor data relating to the vehicle's environment, **characterized by** the following steps:
- outputting of the sensor data in a sensor language which is independent of the driver assistance function,
- translation of the sensor language into a driver assistance functional language, independent of the sensors, for the at least one driver assistance function.

2. Method according to Claim 1, for generating object hypotheses relating to objects whose location is determined by at least one sensor (16, 30), **characterized in that** the location determining times of the objects are specified in the sensor language in each case in a sensor-specific coordinate system, and during the translation into the functional language they are converted into a vehicle-specific coordinate system.

3. Method according to Claim 1 or 2, **characterized in that** the sensor data are periodically measured and output by the sensors (16, 30) and in the sensor language they each relate only to the current measurement cycle, and **in that** during the creation of the environmental hypotheses in the functional language the history of the sensor data obtained in successive measurement cycles is taken into account.

4. Method according to one of the preceding claims, **characterized in that** environmental hypotheses (26, 28; 38, 40) for a plurality of assistance functions (20, 22) are generated jointly and on the basis of the same sensor data.

5. Method according to one of the preceding claims, **characterized in that** during the creation of the environmental hypotheses (38, 40) sensor data from a plurality of sensors (16, 30) are fused with one another.

6. Method according to Claim 5, **characterized in that** sensor-specific environmental hypotheses (26', 28'; 32, 34) are firstly generated on the basis of the data of each individual sensor (16, 30) and are then fused in a further step to form environmental hypotheses (38, 40) for the assistance functions (20, 22).

7. Method according to one of the preceding claims, **characterized in that** the environmental hypotheses comprise both object hypotheses (26, 28; 38, 40) and lane hypotheses (42, 44).

8. Method according to Claim 7, **characterized in that** the lane hypotheses (44) are generated by fusing data of at least one sensor (30) for determining the location of an object with data of the built-in vehicle sensor system (18).

9. Driver assistance system for motor vehicles, having at least one assistance function (20, 22) and at least one sensor (16, 18) for detecting the environment of the vehicle **characterized by** an information platform (12) which forms an interface between the sensors (16, 30), on the one hand, and the assistance functions (20, 22), on the other, and is designed to carry out the method according to one of Claims 1 to 8.

10. Driver assistance system according to Claim 9, **characterized in that** information about the type and number of the sensors (16, 30) which are present, about the installation location of these sensors in the vehicle and about the type and number of the implemented assistance functions (20, 22) is concentrated in the information platform (12).

## Revendications

1. Procédé pour produire des hypothèses relatives à l'environnement extérieur (26, 28 ; 32, 34, 38, 40) pour au moins une fonction d'assistance au conducteur (20, 22) dans un véhicule automobile, par analyse de données de capteur sur l'environnement extérieur du véhicule, **caractérisé par** les étapes suivantes :
envoi des données de capteur dans une langue de capteur indépendante des fonctions d'assistance au conducteur ;
conversion de la langue de capteur dans une langue de fonctions d'assistance au conducteur indépendante du capteur pour l'au moins une fonction d'assistance au conducteur.

2. Procédé selon la revendication 1, pour produire des hypothèses relatives à un objet sur des objets localisés par au moins un capteur (16, 30), **caractérisé en ce que** les temps de localisation des objets sont respectivement spécifiés dans une langue de capteur, dans un système de coordonnées spécifique au capteur, et sont convertis dans un système de coordonnées spécifique au véhicule lors de la conversion dans la langue fonctionnelle.

3. Procédé selon la revendication 1 ou 2, **caractérisé en ce que** les données de capteur sont périodiquement mesurées par les capteurs (16, 30) et sont envoyées dans la langue de capteur lorsqu'elles concernent respectivement le cycle de mesure actuel et qu'en cas d'émission d'hypothèses relatives à l'environnement extérieur dans la langue fonctionnelle, l'historique des données de capteur obtenues pour les cycles de mesure successifs est pris en compte.

4. Procédé selon l'une quelconque des revendications précédentes, **caractérisé en ce que** des hypothèses relatives à l'environnement extérieur (26, 28 ; 38, 40) servant pour plusieurs fonctions d'assistance (20, 22) sont produites ensemble et sur la base de données de capteur identiques.

5. Procédé selon l'une quelconque des revendications précédentes, **caractérisé en ce qu'**en cas d'émission d'hypothèses relatives à l'environnement extérieur (38, 40), les données de capteur de plusieurs capteurs (16, 30) sont fusionnées les unes avec les autres.

6. Procédé selon la revendication 5, **caractérisé en ce que** sur la base des données de chaque capteur (16, 30) individuel, des hypothèses relatives à l'environnement extérieur (26', 28' ; 32, 34) spécifiques au capteur sont d'abord produites, lesdites hypothèses étant ensuite fusionnées au cours d'une étape supplémentaire pour constituer des hypothèses relatives à l'environnement extérieur (38, 40) pour les fonctions d'assistance (20, 22).

7. Procédé selon l'une quelconque des revendications précédentes, **caractérisé en ce que** les hypothèses relatives à l'environnement extérieur comprennent tant des hypothèses relatives à un objet (26, 28 ; 38, 40) que des hypothèses relatives à la trajectoire (42, 44).

8. Procédé selon la revendication 7, **caractérisé en ce que** l'hypothèse relative à la trajectoire (44) est obtenue par fusion de données d'au moins un capteur (30) afin de localiser des objets à l'aide des données d'un système de capteurs de véhicule propre (18).

9. Système d'assistance au conducteur pour véhicules automobiles, doté d'au moins une fonction d'assistance (20, 22) et d'au moins un capteur (16, 18) servant à détecter l'environnement extérieur du véhicule, **caractérisé par** la présence d'une plateforme d'information (12) formant d'une part une interface entre les capteurs (16, 30) et d'autre part les fonctions d'assistance (20, 22) et étant réalisée pour mettre en oeuvre le procédé selon l'une quelconque des revendications 1 à 8.

10. Système d'assistance au conducteur selon la revendication 9, **caractérisé en ce que** les informations relatives au type et au nombre de capteurs (16, 30) présents sont concentrées à l'endroit physique où se trouvent ces capteurs dans le véhicule ainsi que le type et le nombre des fonctions d'assistance (20, 22) implémentées dans la plateforme d'information (12).
